# EUROPEAN PATENT APPLICATION

(11) **EP 4 800 602 A1**
(43) Date of publication of application: **02.09.2026**
(21) Application number: 25383279.4
(22) Date of filing: 18.11.2025
(51) Int. Cl.: G06K 19/06

(54) **METHOD FOR PRODUCING A METADATA CHIP OF DATA MODULES**

(30) Priority: 27.02.2025 EP 25382179
(71) Applicant: Consejo Superior De Investigaciones Científicas - CSIC, 28006 Madrid (ES)
(72) Inventor: DUCH LLOBERA, Marta, 28006 Madrid (ES); AGUSIL ANTONOFF, Juan Pablo, 28006 Madrid (ES); PLAZA PLAZA, José Antonio, 28006 Madrid (ES)
(74) Representative: Herrero & Asociados, S.L.

(57) **Abstract**

Method for producing a metadata chip (8) of data modules (41), comprising the steps of preparing a sacrificial layer (2), a first structural layer (3) configured to allows light to pass through, a design layer (4) being capable of including bidimensional metadata information, having a high optical contrast, shaping the design layer (4) using a photolithography, engraving or etching technique, to define shape and dimensions of a data module (41), shaping a first cover (31) of the data modules (41), and removing the sacrificial layer (2) in order to produce metadata chips (8) not easily visible, containing metadata security information, for enhancing security.

## Description

### TECHNICAL FIELD OF THE INVENTION

The present invention relates to the field of engineering focused to manufacturing and producing a metadata chip of data modules, understood as planar particles supporting data and metadata information at a micro- and nanoscales. The area of application of this invention is very wide, encompassing the sectors of inks, anti-fraud, anticounterfeiting, item identification, information management and even Biology, Medicine and Pharmacology.

### BACKGROUND OF THE INVENTION

Metadata is data that provides essential information about other data, allowing a better organization and data management, fast data search and retrieval, inter-operability, data governance, improving security and access control, preservation and traceability or improve data quality by correcting errors among other additional information.

Daily used Metadata Codes at macroscopic scale have endless possibilities in many industrial and non-industrial fields. Common examples are Quick Response (QR), Data Matrix code, PDF417, Aztec codes... However, their counterparts at the microscale and in suspension are not a reality nowadays as they have inherent difficulties due to size-consideration, fabrication, information format, data support or even data reading.

The development of metadata information supports at the microscale can benefit from the worldwide idea shared across the microelectronics industry and the collective imaginary of putting chips anywhere.

Accessible information at the microscale is of enormous interest in many applications ranging from medicine, biotechnology, security, tracking and identifying items among other fields. Thus, main efforts have been done to develop 1D identification codes at the microscale. However, 1D barcodes have limited storage capacity as they have to grow a lot in length to increase storage capacity being more difficult to fabricate, risk of structural integrity and more difficult to process the data.

2D matrix identification codes can reduce these limitations mainly as they increase their storage capacity by arranging bits at two perpendicular directions (horizontally and vertically). 2D identification codes have also been produced at the microscale. Traditional 1D and 2D identification barcodes provide an identifier and any metadata have to be stored in a related external database which reduce functionality and add operational complexity. The lack of metadata at the microscale is an important limitation of these devices, especially considering that they are required to remain in a liquid or semiliquid suspension during fabrication, manipulation and/or application, thus being more susceptible to mechanical damage, contamination adhering to the code, and reading challenges in adverse conditions such as tilt, insufficient lighting, or low-transparency media.

Metadata codes in chips at microscale present a more difficult fabrication process which required precise patterning at the micro- and nanoscale. It is even more difficult to store the data modules, or just data, in a reduce size, as they are more susceptible to information loss caused by mechanical wear or the adhesion of substances to the code. The code require to be implemented a mechanical support to prevent unconnected bits/data modules from being lost. Their use in a suspension format or after transferred to a non-flat surface at the microscopic scale increase reading difficulty (code tilt, reduce contrast) which require reading from any direction (including front and back reading) and/or reduce contrast. In addition, the small size implies a fabrication, manipulation and use in a liquid or semiliquid medium forming a metadata suspensions composed by the liquid or semiliquid medium (liquid phase) and the particles (solid phase) that contains the data and metadata information. Silicon chips benefits from miniaturization, allowing the fabrication of devices at the scale of a single microparticle. Their design determines the functionality, yet their fabrication requires a compromise between their physical attributes, intended chemical modification, biocompatibility and throughput.

Although silicon-based integrated devices have reached unprecedented progress, adapting silicon devices to non-flat surfaces is a challenge. The interest in flexible devices is growing, however, the fragile nature of silicon makes bendability difficult. Silicon Young's modulus (E<100> ~130 GPa, E<110> ~169 GPa) is too high to enable flexible chips at the millimetre scale. Potential 3D complex materials at microscale are textile and paper. Painting is one of the most popular artistic expressions since ancient works. Besides, paper is the most extensively produced surface by humans, offering a significant opportunity for the development of imbedded devices. Additionally, electronic textiles, where functionality is incorporated into the fabric, have also a promising future.

Moreover, advancements in biomolecular studies have greatly benefited from the miniaturization of biological assays, particularly in multiplexed biochemical detection. The ability to identify, quantify, and analyze biochemical and physiological changes in small volumes has been revolutionized by the use of planar arrays (PA). PAs consist of multiple independent and organized sensing features on a single device, enabling parallel assays. Further miniaturization was achieved with the development of suspended arrays (SA) of particles, which offer advantages such as fluid-phase kinetics, faster detection, and reduced sample requirements. In SA technologies, individual assays are tracked using subpopulations of particles, each carrying a distinct molecular probe (array element) on its surface. These subpopulations are distinguished by unique attributes (codes), often represented by different colours. However, the number of available colours limits the number of subpopulations to about 4 or 5.

The chip miniaturization has opened the venue to extraordinary small functional chips at the microscale. Thus, 60 × 60 µm² chips with remote actuation for chemical sensing, microscopic walking robots, and chips that can be totally internalized inside a single living cell, are a factual reality. For instance, all these devices share scale with solid pigmented microparticles which have been historically used in coloured inks. The main difficulties of chips at the microscale comes from their small size as it is a challenge their fabrication, manipulation and use. Moreover, the integration of functionalities in a micrometre space is really challenging and the main limitation of these chips.

1D (linear) numerical identification codes consist of only numbers. On the contrary, 1D (linear) alphanumeric identification codes are composed of a series of numbers or letters to identify a person, product, among others. Although, alphanumeric codes contain less data capacity density and reduced automatization capabilities than their numerical barcodes counterparts, they are simpler for identification. The data capacity offered by linear codes, can be enlarged by using 2D (matrix) identification codes which store information on both vertical and horizontal directions.

A 2D identifications code can offer more data per unit area, for instance more numbers or alphanumeric characters of the code in a reduced area. However, not all the bidimensional information systems offer the same uses and capabilities. In fact, it is known that, these 2D identifications systems for storing information has specific problems:
a) low storage capacity of additional information, as the stored information is limited to numeric or alphanumeric data; certain information cannot be stored, such as Metadata, links to URL, text, emails, phone numbers, contact information (vCard or MeCard), WiFi connection data, hidden text or messages, calendar events, authentication or tracking tokens be linked to a location to track where a code has been scanned, among other data;
b) the scanning action can only be carried out from a specific direction, making it difficult to read; not compatible to be readable by daily-used personal devices as mobiles, cameras, and computers;
c) very limited security levels for electronic authentication, regulating apostilles (documents bearing a seal of authenticity, counterfeit detection);
d) lack of error correction capacity;
e) low damage resistance, becoming illegible with wear and tear; and
f) low protection and versatility.

These limitations are even more relevant at the microscale and nanoscale applications where reduced size over exposed the code to soil and damage which required an improved error correction capacity. It is more difficult to read it from any direction, including front and back reading, when suspended in liquids or placed in non-planar surfaces. Due to their small size it requires a high encoding capacity of data per unit of area. The small printout size of the code requires a precise technology to avoid distortion or loss of the data and bad quality image. Problems with the illumination can reduce the contrast which required appropriated materials. And due to their small size the matrix codes has to be manipulated or transferred suspended in liquids medium, among others.

Although, current microfabrication techniques have already demonstrated their versatility to fabricate 3D functional chips at the microparticle scale, their chemical or physical release from the substrate presents a significant challenge, in order to produce metadata chips not easily visible, containing metadata security information, for enhancing security.

### DESCRIPTION OF THE INVENTION

The present invention relates to method for producing a metadata chip of data modules, being these chips planar particles of size selected between nanometric size and micrometric size, comprising a layer including displayable metadata information in the form of data modules that is a two dimensional matrix barcode, preferably a quick-response (QR) code.

The fabricated metadata chips are made from materials, or combinations of materials, commonly used in the microelectronics and MEMS industries and they can also be chemically functionalized to add further functionalities.

The invention contributes to the transfer of metadata chips using traditional and economically viable instruments, including contact techniques such as painting tools (paintbrush) or writing devices (fountain or ballpoint pens), but also by noncontact techniques as an inkjet printer, where the ink droplet containing suspended metadata chips travels from the instrument to the substrate or any deposition technique of liquid with the suspension of chips (pipette, stamp...). The invention also contributes to the transfer of metadata chips from a liquid suspension to planar and non-planar surfaces at microscale. And thus, the use of miniaturized chips at microscale can be a solution to fix to non-flat surfaces at the microscale. This invention opens up a wide range of possibilities, for instance for security applications, error detection and correction, renditioning to external links... This applies to practically any material surface as most have an irregular surface at the microscale. In the case of bioassays, conventional means for handling microparticles in biological systems are used, such as pipettes or biotechnological labware Therefore, suspended arrays (particles) with attributes that support a higher number of unique codes are required for improved multiplexing capabilities. The integration of metadata into these SA particles, i.e. Metadata Suspensions, would open up a wide range of possibilities, for instance for security, error detection and correction, renditioning to external links...

More particularly, the method for producing a metadata chip of data modules comprises the steps of: i) preparing a sacrificial layer on top of a planar substrate of an starting material; ii) preparing a first structural layer on top of the sacrificial layer, wherein the first structural layer is configured to allows light to pass through, wherein the material of the first structural layer is different from the sacrificial layer; iii) preparing a design layer on top of the structural layer, the design layer being capable of including bidimensional metadata information, wherein the material of the design layer is different from the sacrificial layer and the structural layer, said material having a high optical contrast with the first structural layer; iv) shaping the design layer, using a photolithography technique and a technique selected from engraving or etching, to define shape and dimensions of a data module, configured to include bidimensional metadata information; v) shaping the first structural layer, using a photolithography technique, to define shape and dimensions of a first cover of the data modules; vi) removing the sacrificial layer to obtain the metadata chip of data modules. This enables a controlled and damage-free release of micro-scale data modules by introducing a sacrificial layer with selective removability, thus overcoming substrate detachment limitations of conventional microfabrication. Moreover, the use of optically transparent and high-contrast materials ensures reliable optical encoding and reading of metadata at microscale. The combination of multilayer patterning and photolithographic shaping provides high precision and reproducibility, allowing scalable fabrication of metadata chips with enhanced security features.

Additionally, the method for producing a metadata chip of data modules comprises the step of preparing a second structural layer on top of the design layer, wherein the second structural layer is configured to allow light to pass through, wherein the material of the second structural layer is the same from the first structural layer. This improves the mechanical stability and encapsulation of the data modules, ensuring protection of the embedded metadata design. The optical transparency of both structural layers enables efficient light transmission and accurate optical detection of encoded information. Furthermore, the material continuity between the two structural layers minimizes interfacial stress and delamination risks during fabrication and release.

More specifically, the method for producing a metadata chip of data modules comprises the step of shaping the second structural layer, using a photolithography technique, to define shape and dimensions of a second cover of the data modules to obtain the metadata chip. Said photolithographic shaping of the second structural layer allows the precise formation of a second cover, resulting in a fully encapsulated metadata chip with improved structural integrity. This configuration provides enhanced environmental and chemical protection for the internal metadata design during handling and release. Additionally, the accurate alignment between the first and second covers ensures uniform optical properties and facilitates consistent metadata readability across all produced data modules.

In a preferred embodiment of the invention, the data modules are QR data modules which enables a standardized and high-density encoding of metadata, facilitating robust and error-tolerant data retrieval at microscale. The QR geometry enhances recognition reliability even under partial damage or optical distortion. Furthermore, the compatibility of QR patterns with conventional reading systems allows seamless integration of the metadata chips into existing optical verification and security infrastructures.

According to another aspect of the invention, the method for producing a metadata chip of data modules comprises the step of biochemically functionalizing at least one external surface of the data modules, with at least one first compound having at least one free reactive group capable to react with a second compound, the first compound being capable of covalent bonding to the at least one external surface of the data modules, thus generating a second reactive site capable of linking one compound together.

The biochemical functionalization of the external surfaces provides a controllable interface for selective attachment of biomolecules or reactive compounds, thereby enabling tailored chemical interaction or tagging. Covalent bonding of the first compound ensures long-term surface stability and prevents detachment under physical or chemical stress. Moreover, this functionalization step adds an additional layer of security or traceability by allowing unique biochemical identifiers to be integrated into each metadata chip.

In addition, the first compound is capable of covalent bonding to the at least one external surface of the data modules by means of an intermediate crosslinker, which has the function of molecular adhesive. Using an intermediate crosslinker to promote covalent bonding enhances the control and efficiency of the surface functionalization process, ensuring uniform biochemical attachment across the metadata chip surfaces. The crosslinker provides chemical versatility, enabling the coupling of a wide range of reactive or biological molecules. Additionally, this approach improves bonding strength and reduces unwanted side reactions, thereby increasing the reproducibility and durability of the functionalized data modules.

Biochemically functionalizing step comprises immobilizing the crosslinker having at least one free reactive group onto the unmodified surface of the metadata chip using a medium configured to not affect the chemical functionalizations, and reacting the functional group of the at least one compound with the crosslinker.

The present invention also relates to a metadata chip of data modules, produced with the described method, wherein the design layer and/or the first structural layer and/or the second structural layer comprises a magnetic material. Incorporating a magnetic material into one or more layers of the metadata chip enables remote manipulation, orientation, or collection of the microscale data modules through external magnetic fields. The magnetic response enhances process controllability during fabrication, transfer, and deployment. Furthermore, the integration of magnetic functionality provides an additional security dimension, allowing physical authentication or encoded magnetic signatures to complement the optical metadata.

In more detail, the first structural layer and/or the second structural layer of the metadata chip of data modules are of silicon dioxide, such that the data modules are encapsulated in transparent casing to allow dual-side readability. Using silicon dioxide as the material for the structural layers provides excellent optical transparency and chemical inertness, ensuring stable visualization and long-term preservation of the embedded metadata. The dielectric nature of silicon dioxide minimizes electrostatic interference and enhances compatibility with standard microfabrication and photolithography processes. Additionally, its mechanical robustness and smooth surface quality contribute to reliable encapsulation and precise dimensional control of the metadata chips.

Furthermore, the data modules comprises at least a two dimensional matrix barcode, which enables high-density metadata storage with superior error-correction capacity, ensuring reliable decoding even under partial damage or contamination. The matrix format allows compact and scalable information embedding at the microscale without compromising optical readability. Moreover, the standardized structure of 2D barcodes facilitates automated authentication and rapid digital verification in security or traceability applications.

According to another aspect of the invention, the data modules comprises redirect links to external sources of information, as URLs (links to web pages, databases, APIs) or persistent identifiers, such as DOI (Digital Object Identifier), which enables dynamic association between the physical chip and external digital databases or APIs. This hybrid physical-digital linkage enhances traceability, authentication, and update capability of the encoded information over time. Furthermore, it allows scalable integration into networked security systems, providing continuous verification and real-time metadata management beyond the physical device.

Complementarily, the data modules comprises error checking and/or correction data. Incorporating error checking and correction data, such as Reed-Solomon redundancy codes, ensures robust data integrity and reliable decoding of metadata even under partial degradation or optical interference. This redundancy mechanism enhances the resilience of the metadata chip against fabrication defects and environmental stress. Additionally, the inclusion of version-control information supports dynamic content management and secure updating of encoded datasets across production batches.

Furthermore, the data modules comprises encryption and cipher data, which increases security, to protect sensitive data; such as Digital Signatures, AES Encryption, providing a robust protection layer against unauthorized access or tampering of the embedded metadata. The use of cryptographic encoding ensures data authenticity, integrity, and confidentiality within each microscale chip. Moreover, this feature significantly enhances the security functionality of the metadata modules, enabling their application in high-assurance identification and anti-counterfeiting systems.

Advantageously, the data modules comprises contact data, which enables direct identification of ownership, origin, or authentication authority, thereby supporting traceability and provenance verification. This information layer facilitates secure communication channels between the physical chip and authorized users or institutions. Furthermore, embedding contact metadata enhances post-deployment management and recovery processes, improving accountability and lifecycle control of the metadata chips.

In a preferred embodiment of the invention, the data modules comprises chip identification data, which enables unique device-level traceability and prevents duplication or counterfeiting. The integrated identifier allows secure linkage between the physical chip and digital records, ensuring verifiable authenticity across manufacturing and deployment stages. Additionally, this intrinsic ID facilitates automated inventory, lifecycle tracking, and interoperability within larger security or data management systems.

Additionally, the data modules comprises semantic and/or technical context data, which enables self-descriptive information encoding, facilitating autonomous interpretation by digital systems or AI-based readers. This contextual metadata enhances interoperability and machine-readability, allowing seamless integration into complex data networks or smart environments. Moreover, embedding semantic layers increases the informational depth and functional adaptability of each metadata chip, improving its value for advanced security and traceability applications.

In the attached drawings it is shown, by way of non-limiting example, a method for producing a metadata chip of data modules, constituted according to the invention. Other characteristics and advantages of said method for producing a metadata chip of data modules, object of the present invention will become apparent from the description of a preferred, but not exclusive, embodiment that is illustrated by way of non-limiting example in the accompanying drawings, in which:

### BRIEF DESCRIPTION OF THE DRAWINGS

Figure 1A.- Is a view of a general scheme of the method for fabricating the metadata chips, wherein an opaque layer is used over a transparent structural layer, in accordance with the present invention;
Figure 1B.- Is a view of a general scheme of the method for fabricating the metadata chips, wherein an opaque layer is used between two transparent structural layers of different material, in accordance with the present invention;
Figure 1C.- Is a view of a general scheme of the method for fabricating the metadata chips, wherein an opaque layer is used between two transparent structural layers of the same material, in accordance with the present invention;
Figure 2.- Is a view of an optical microscopy image at a micrometric scale of QR chips with dimensions of 54×54 µm² on the fabrication wafer, in accordance with the present invention;
Figure 3.- Is a view of an optical microscopy image at a micrometric scale of QR chips with dimensions of 54×54 µm² released and suspended in water, in accordance with the present invention;
Figure 4.- Is a view of a scheme of the method of transfer and placement of a suspended metadata chips over a flat substrate, in accordance with the present invention;
Figure 5.- Is a view of an optical microscopy image at a micrometric scale of a QR chip with dimensions of 54×54 µm² transferred with a brush on an oil painting, in accordance with the present invention;
Figure 6.- Is a view of an optical microscopy image at a micrometric scale of a QR chip with dimensions of 27×27 µm² transferred on paper using a pen, in accordance with the present invention;
Figure 7.- Is a view of an optical microscopy image at a micrometric scale of a QR chip with dimensions of 27×27 µm² transferred on paper using a fountain pen, in accordance with the present invention;
Figure 8.- Is a view of a scheme of the method for functionalization of, first, the upper surface, and second, the whole surfaces of the metadata chip, in accordance with the present invention;
Figure 9.- Is a view of a schematic method for embedding the metadata chips within a material, in accordance with the present invention;
Figure 10A.- Is a view of a schematic method for functionalization of the metadata chips for single recognition or detection, in accordance with the present invention;
Figure 10B.- Is a view of a schematic method for multiplexed recognition or detection of functionalized subpopulations of metadata chips within a single assay, in accordance with the present invention;
Figure 11.- Is a view of a schematic method for using magnetism in biodetection by means of the metadata chips, in accordance with the present invention;

### DESCRIPTION OF A PREFERRED EMBODIMENT

In view of the aforementioned figures and, according to the numbering adopted, a preferred embodiment of the invention can be seen in them, which comprises the parts and elements indicated and described in detail below.

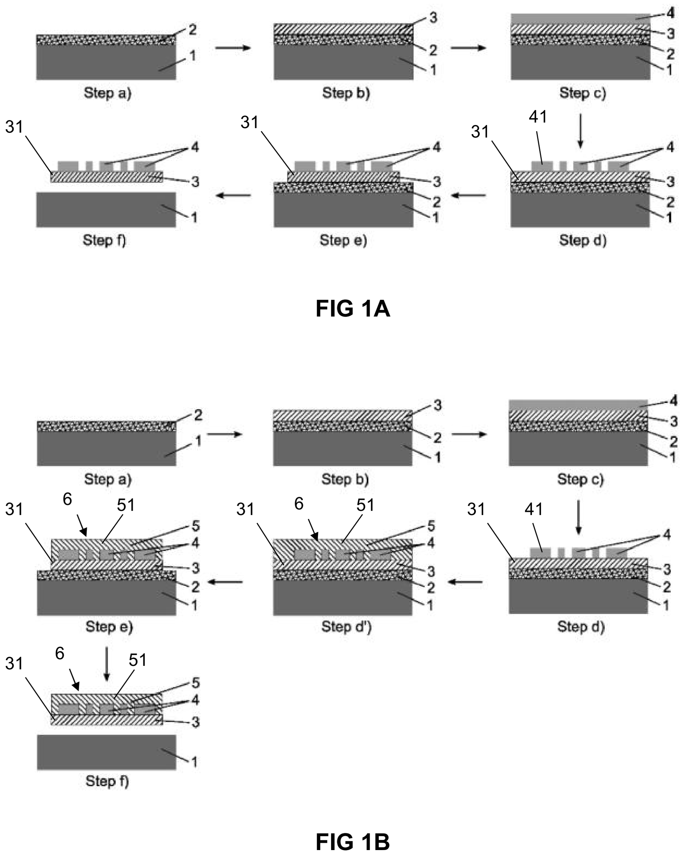

Figure 1A shows a view of a general scheme of the method for fabricating the metadata chips, wherein an opaque layer, a design layer (4), is used over a transparent structural layer, first structural layer (3). In particular, it shows the sequence between the starting material (1), the sacrificial layer (2), the first structural layer (3), as first cover (31), the design layer (4) for the data module (41).

Figure 1B shows a view of a general scheme of the method for fabricating the metadata chips, wherein an opaque layer, a design layer (4), is used between two transparent structural layers, a first structural layer (3) and second structural layer (5), of different material. In particular, it shows the sequence between the starting material (1), the sacrificial layer (2), the first structural layer (3), as first cover (31), the design layer (4) for the data module (41), the second structural layer (5), as second cover (51), comprising a surface (6).

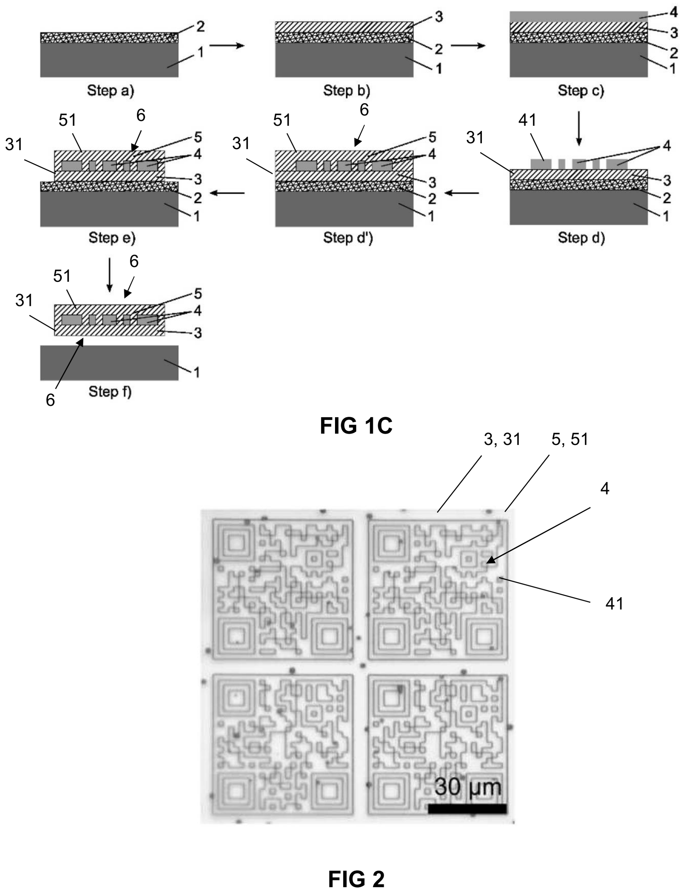

Figure 1C shows a view of a general scheme of the method for fabricating the metadata chips, wherein an opaque layer, a design layer (4), is used between two transparent structural layers, a first structural layer (3) and second structural layer (5), of the same material. In particular, it shows the sequence between the starting material (1), the sacrificial layer (2), the first structural layer (3), as first cover (31), the design layer (4) for the data module (41), the second structural layer (5), as second cover (51), comprising a surface (6).

Figure 2 shows a view of an optical microscopy image at a micrometric scale of QR chips (8) with dimensions of 54×54 µm² on the fabrication wafer, the first structural layer (3) as first cover (31). The QR chips being formed by the design layer (4) as data module (41), covered by a second structural layer (5) as second cover (51).

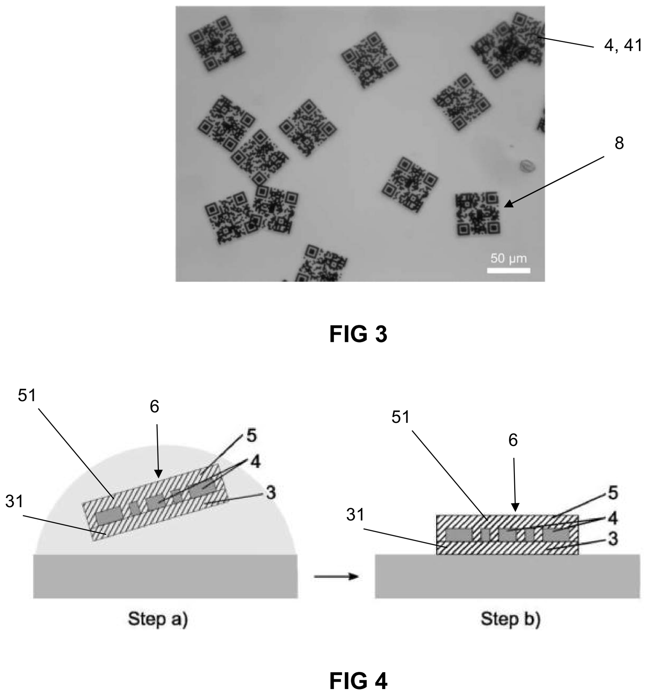

Figure 3 shows a view of an optical microscopy image at a micrometric scale of QR chips (8), with the design layer (4) as data module (41), and with dimensions of 54×54 µm² released and suspended in water.

Figure 4 shows a view of a scheme of the method of transfer and placement of suspended metadata chips (8) over a flat substrate. In particular, it shows the sequence between the first structural layer (3), as first cover (31), the design layer (4) for the data module (41), the second structural layer (5), as second cover (51), comprising a surface (6).

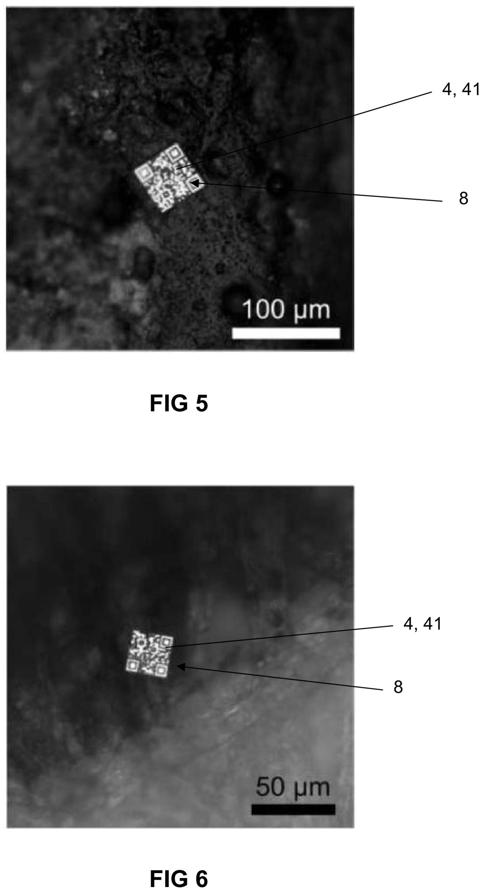

Figure 5 shows a view of an optical microscopy image at a micrometric scale of a QR chip (8) with dimensions of 54×54 µm² of the design layer (4) as data module (41), transferred with a brush on an oil painting.

Figure 6 shows a view of an optical microscopy image at a micrometric scale of a QR chip (8) with dimensions of 27×27 µm² of the design layer (4) as data module (41), transferred on paper using a pen.

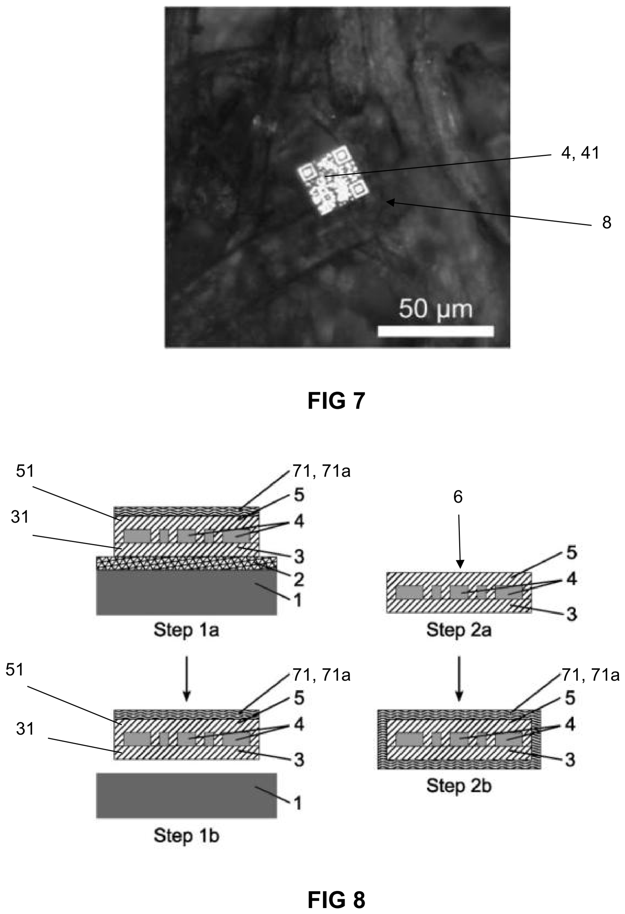

Figure 7 shows a view of an optical microscopy image at a micrometric scale of a QR chip (8) with dimensions of 27×27 µm² of the design layer (4) as data module (41), transferred on paper using a fountain pen.

Figure 8 shows a view of a scheme of the method for functionalization of, first, the upper surface (6), and second, the whole surfaces of the metadata chip (8) with microcontact printing (step 1a) while the metadata chips (8) remain attached to the sacrificial layer (2) on the fabrication substrate, or starting material (1), and then released (step 1b). In an alternative embodiment, the whole surfaces (6) of the metadata chip (8) can be functionalized by wet chemistry (step 2b) after the metadata chips (8) had been released (step 2a). In particular, it shows the sequence between the starting material (1), the sacrificial layer (2), the first structural layer (3), as first cover (31), the design layer (4) for the data module (41), the second structural layer (5), as second cover (51), comprising a surface (6), and over that the first compound (71) with optionally a crosslinker (71a).

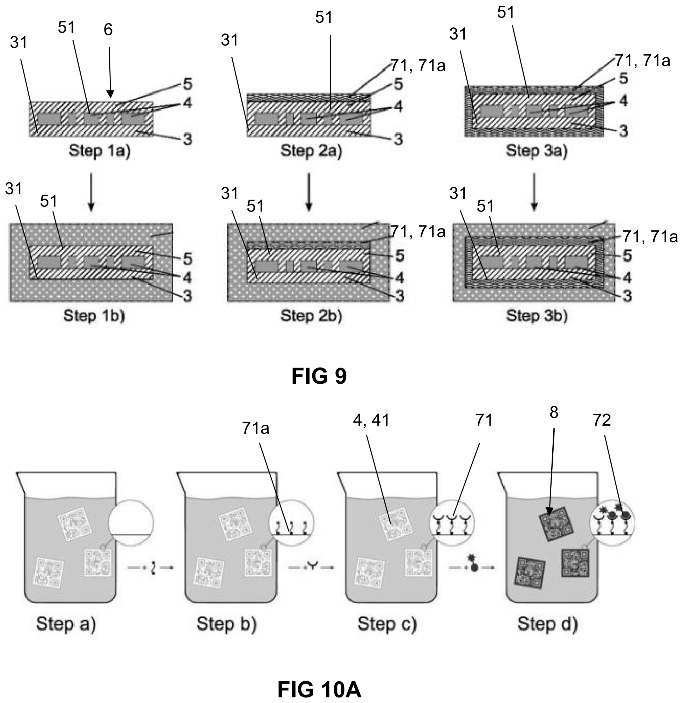

Figure 9 shows a view of a schematic method for embedding the metadata chips (8) within a material. This embedding can use metadata chips (8) (steps 1a), metadata chips (8) with functionalization on its upper surface (step 2a) or metadata chips (8) functionalized over all of its outer surfaces (6) (step 3a). Any metadata chips (8) can be embedded in a transparent solid material (step 1b, 2b and 3b). In particular, it shows the sequence between the first structural layer (3), as first cover (31), the design layer (4) for the data module (41), the second structural layer (5), as second cover (51), comprising a surface (6), and over that the first compound (71), optionally with a crosslinker (71a).

Figure 10A shows a view of a schematic method for functionalization of the metadata chips (8) for single recognition or detection. In particular, it shows the functionalization of the design layer (4) with the data module (41), via a first compound (71), optionally with a crosslinker (71a), and a second compound (72).

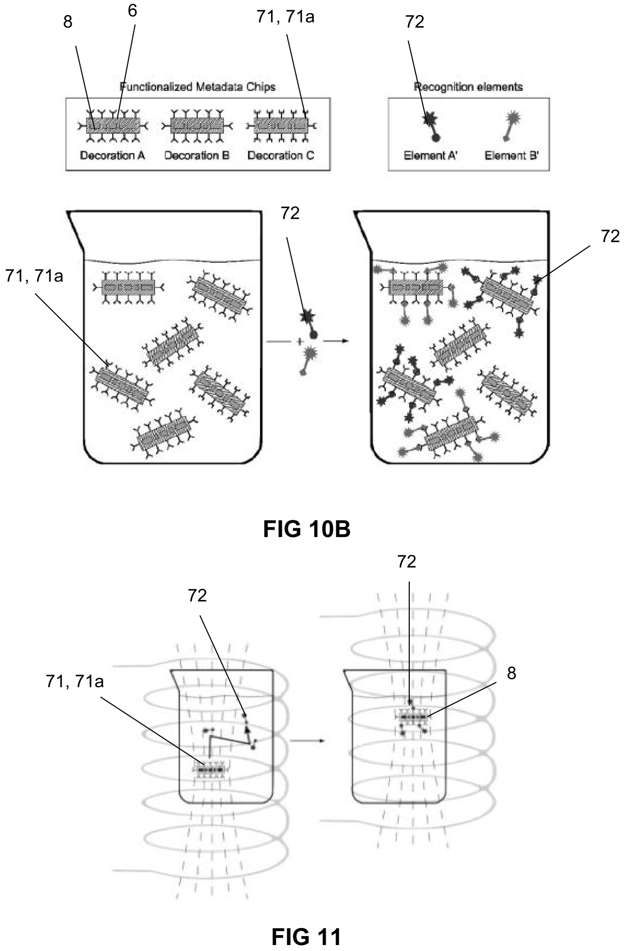

Figure 10B shows a view of a schematic method for multiplexed recognition or detection of functionalized subpopulations of metadata chips (8) within a single assay. Each subpopulation has a unique functionalization on their outer surface, as decorations. The decorating entities selectively bind to a single recognition element. A collection of various subpopulations of metadata chips (8) with the same attribute is mixed with the recognition elements. The recognition elements will bind to the subpopulation of metadata chips (8) with the complementary decoration. The metadata chips (8) have the data and metadata relate to the recognized element. In particular, it shows the detail of a first compound (71), optionally with a crosslinker (71a), and a second compound (72) over the surface (6).

Figure 11 shows a view of a schematic method for using magnetism in biodetection by means of the metadata chips (8). The main idea is that, reaction of chips (8) is usually difficult in a low-sample environment, in such a way that it is advantageous the use of external magnetic fields to "move" and concentrate the chips (8) for making the detection and cleaning easier. Again it shows the detail of a first compound (71), optionally with a crosslinker (71a), and a second compound (72).

In the context of the present invention, the metadata chips (8) have a size mainly in the optically visible range: side length between 1 µm and 500 µm, thickness between 20 nm and 50 µm (measured by optical microscopy, co focal microscopy, atomic microscopy or scanning electron microscopy or by focused ion beam, profilometer or ellipsometer measurements), and the data modules (41) (data, alignment patterns, position patterns, error corrections up to 30% of data bytes can be easily restored...) have lateral dimensions of between 100 nm and 50 µm and a thickness between 20 nm and 50 µm. Preferably, the metadata chips (8) have both the lateral dimensions between 1 µm and 100 µm and the thickness between 100 nm and 5 µm, respectively, and the data modules have lateral dimensions between 0.5 µm and 10 µm and the thickness between 100 nm and 5 µm, respectively.

An object of the invention is a suspension of planar metadata chips (8) supporting displayable metadata information in the form of data modules (41) comprising:
- a solid phase comprising one or more planar metadata chips (8), named chips, having a lateral dimension between 1 µm and 500 µm and a thickness between 20 nm and 50 µm, said chips comprising:
   · a planar structural layer (3) having a thickness between 20 nm and 50 µm, made of a material that is transparent or allow light to pass through, being selected from the group consisting of: semiconductor material, insulating oxide, insulating nitride, semiconducting oxide, semiconducting nitride, metal, polymer, photoresist, and any combination thereof; and
   · data modules (4) supported on the structural layer (3) containing the displayable metadata information, said data modules (4) being a two-dimensional matrix barcode, wherein each data module (4) has lateral dimensions between 100 nm and 50 µm and a thickness between 20 nm and 50 µm, and is made of a material different form that of the structural layer (3) and selected from the group consisting of: non-transparent material, opaque material, and material having a high optical contrast with the protecting structural layer (3); the material being selected from the group consisting of: semiconductor material, insulating oxide, insulating nitride, semiconducting oxide, semiconducting nitride, metal, magnetic or magnetizable material, polymer, photoresist, and any combination thereof; and a continuous liquid or semi-liquid phase, as a suspension medium.

The percentage by weight of the solid phase is between 10⁻¹²% and 30% with respect to the total weight of the suspension. In the most preferred case, the data modules are a QR code. A quick response (QR) code or other similar metadata data matrix code, such as PDF417, Aztec or the like, are a readable image that contains unique patterns to define an alphanumerical code which include enhanced metadata and offer strong fault tolerance with a large spectrum of applications and that can be easily read it by several mobile device operating systems, computers or the like. The invention does not limit only to QR codes, but to all those already cited in this paragraph or other general or designed for a specific purpose application metadata codification system.

Preferably, the chips (8) comprise a second planar structural layer (5), on top of the data modules (4) on the side opposite the first structural layer (3), having a thickness between 20 nm and 50 µm and made of a material that is transparent or allow light to pass through, different to that of the data modules (4) and equal to or different from that of the first structural layer (3). The material being selected from the group consisting of: semiconductor material, insulating oxide, insulating nitride, semiconducting oxide, semiconducting nitride, metal, polymer, photoresist, and any combination thereof. In this particular embodiment, the data modules contained in the chip (8) is totally surrounded by the structural layers (3, 5), in such a way that the metadata information is legible from any position.

In another particular embodiment, one of the layers selected from the data modules (4) and the first structural layer (3) (and/or the second structural layer (5), if any) contains or are composed of a material that is magnetic or magnetizable, to allow the manipulation of the metadata chip through external magnetic fields (e.g. magnet). In another particular embodiment, that does not exclude the previous ones, at least one surface of the chips (8) is functionalized by at least one compound selected from molecules, biomolecules, nanoparticles, or any combination thereof.

In a general scheme, the method for obtaining a suspension of micro or nanoparticles of metadata chips (8) supporting bidimensional-metadata information follows the scheme of:
a) preparing a sacrificial layer on top of a substrate acting as a support;
b) preparing a transparent structural layer of the chip on top of the sacrificial layer;
c) preparing a non-transparent or high-contrast layer for defining the data modules (41) on top of the first structural layer (3);
d) shaping the design layer to define the data modules (41) by means of a microelectronic lithography technique that defines the geometry and lateral dimensions, and an engraving/etching technique; in this step the metadata has to be designed and included;
   d') optional but preferred: preparing a second transparent structural layer (5) of the chip (8) on top of the sacrificial layer (2);
e) shaping the form of the chips in the structural layers by means of a microelectronic lithography technique that defines the geometry and lateral dimensions of the chip (8), and an engraving/etching technique;
f) removing the sacrificial layer by a microelectronic technique, such as dissolution/etching; and
g) optionally, biochemically functionalizing the surface of the chips (8).

The first and second (optional) transparent structural layers have a supporting function of the data modules (41), and additionally have a protecting role from damage of the information modules shaped at the design layer (4), the first layer of the backside and the second (if any) of the front side.

Specifically, the method for obtaining the suspension of planar metadata chips (8) comprises:
a) preparing (e.g. depositing or growing) a sacrificial layer (2) having a thickness between 20 nm and 50 µm, preferably between 50 nm and 2 µm, onto a starting material (1), wherein:
   · the starting material (1) is a planar/flat substrate compatible with microfabrication technologies typical of microelectronics and MEMs and NEMs manufacturing (lithographic, deposition, growing, etching, doping, micro/nanomachining, bio-chemical surface modification, among others techniques), e.g. a silicon wafer, having a diameter of 100 mm and a thickness of 500 µm; and o the sacrificial layer (2) is made of a material selected from the group consisting of: semiconductor material, insulating oxide, insulating nitride, semiconducting oxide, semiconductor nitride, metal, polymer, photoresist, and any combination thereof;
b) preparing (e.g. depositing or growing) a first structural layer (3) having a thickness between 20 nm and 50 µm, preferably between 50 nm and 2 µm, on top of the previous sacrificial layer (2) and the starting material (1), made of a material that is transparent or allow light to pass through, and that is different from the sacrificial layer (2), being selected from the group consisting of: semiconductor material, insulating oxide, insulating nitride, semiconducting oxide, semiconducting nitride, metal, polymer, photoresist, and any combination thereof;
c) preparing (e.g. depositing or growing) a design layer (4) having a thickness between 20 nm and 50 µm, preferably between 50 nm and 2 µm, on top of the structural layer (3) to design the shape of the data modules (41), which is a structure capable of including bidimensional Metadata information (e.g. the data modules (41), preferably a QR), the layer being made of a material different from that of the sacrificial layer (2) and different from that of the structural layer (3), and that is selected from the group consisting of: non-transparent material, opaque material, and material having a high optical contrast with layer (3), and the material being selected from the group consisting of: semiconductor material, insulating oxide, insulating nitride, semiconducting oxide, semiconducting nitride, metal, magnetic or magnetizable material, polymer, photoresist, and any combination thereof;
d) shaping (e.g. by etching) the design layer (4) to define shape and dimensions of the data modules (41) using a photolithography technique and an engraving/etching technique;
e) shaping (e.g. by etching) the surface of the first structural layer (3) to define shape and dimensions of the particle using a microelectronic photolithography technique obtaining the array of metadata chips (8); and
f) removing (e.g. by etching or dissolution) the bottom sacrificial layer (2), thus obtaining the suspended particles in the form of planar metadata chips (8), preferably by means of an etching compound that does not affect the structural layer (3) or the design layer (4).

Step d) of the process of the invention refers to defining the shape and the size of the intended modules containing data and metadata information by means of common photolithography techniques, whilst step e) refers to defining the shape and size of the whole chip by means of common photolithography techniques.

In a preferred embodiment, in order to further prevent the design layer (4) from damage, the process further comprises, between steps d) and e): d') depositing a second structural layer (5) having a thickness between 20 nm and 50 µm, preferably between 50 nm and 2 µm, on top of the design layer (4) (i.e. the remaining data modules previously etched on the design layer (4) and also the first structural layer (3) exposed to the surface), made of a material that is transparent or allow light to pass through, and different from the sacrificial layer (2), being selected from the group consisting of: semiconductor material, insulating oxide, insulating nitride, semiconducting oxide, semiconducting nitride, metal, polymer, photoresist, and any combination thereof. In this particular embodiment, the first structural layer (3) and the second structural layer (5) are preferably of the same material, transparent or allow light to pass through, and both protect the design layer (4) from mechanical o chemical damage. This way, the data modules etched in the (opaque) design layer (4) is embedded in a protector-from-damage "core" of transparent material. This alternative is illustrated in Figure 1C. The fact that the first (3) and (preferred) second (5) structural layers are made of a protective material that is transparent or allow light to pass through is relevant for the invention: it allows the top-view and bottom-view reading of the data modules (41) containing the displayable metadata information, since the metadata chips (8) are randomly oriented in a liquid or semi-liquid suspension or in a 3D complex surface at microscale, when deposited. If the structural layer (3, 5) was opaque (not preferred), then the design layer (4) can only be read from the side without structural layer (3, 5) and the structural layer (3, 5) and the design layer (4) are required to have a good optical contrast.

From protective considerations, there are two main alternative embodiments: a first essential one in which the data modules (41) are supported and protected by a unique structural layer (i.e. having a first and only structural layer (3)); and a second more preferred one in which the data modules can be supported and protected by two structural layers (i.e. also having a second structural layer (5)). This second embodiment is more preferred due to the fact that the protection of the data modules (41) is higher having two structural layers instead of only one.

These embodiments described above are illustrated in Figures 1A and 1B for fabricating chips (8) in which an opaque design layer (4) is used over one or two transparent structural layers. Figure 1A shows the general method (only one structural layer), whilst Figure 1B discloses the preferred embodiment that includes the step of depositing an additional, second structural layer (5), showing the comparison and parallelism. Step a) of Figures 1A, 1B and 1C illustrates the application of the sacrificial layer (2) on the substrate or starting material (1). Element (3) in step b) of Figures 1A, 1B and 1C illustrates the first structural layer (3), which of course, as any skilled in the art would know, must be compatible with the method of removing the sacrificial layer (2) without being affected/damaged, and must be transparent, preferably to visible light. The structural layer (3) must be transparent or allow light to pass through, considering the opacity or thickness of the material of manufacture. Step c) of Figures 1A,1B and 1C shows the application of the design layer (4) over the first structural layer (3), which, if it is not protected by a second structural layer (5, see Figure 1B and 1C), must be compatible with the method of removing the sacrificial layer (2) without being affected/damaged, and must be opaque, preferably to IR, UV, and visible light. Step d) of Figures 1A, 1B and 1C shows the etching step of the surface corresponding to the design layer (4); in a preferred embodiment, the etching action comprises spun photoresist and exposing it to UV light through a photomask that is previously customized attached to an aligner, developed and subsequently patterning the design layer which form the data modules (41). Pieces of element in Step d) of Figures 1A, 1B and 1C shows the etched shape of the design layer (4), i.e. the shape and form of the data modules. Likewise, this design layer (4) must be distinct from the first sacrificial layer (2). In the absence of a second structural layer (5), it must be compatible with the method of removing the sacrificial layer (2) for not being affected/damaged, Figure 1A. In step e) of Figure 1A, the etching action of the structural layer (3) is shown; the etching action comprises spun and exposing a photoresist to UV light through a photomask that is previously customized attached to an aligner, the photoresist is developed and the structural layer (3) is patterned on Figure 1A. In figures 1B and 1C, the same is shown for two structural layers (3) and (5), being patterned to define the lateral dimensions of the data modules (41). Finally, in step f) of Figures 1A, 1B and 1C, the sacrificial layer (2) is removed, just leaving/releasing the arrays of metadata chips (8) having a metadata 2D data modules (41) chip (8).

As derived from Figures 1B and 1C, and additional, optional but preferred step d') is included after step d) and before step e), wherein element (5) shows the second structural layer. This second structural layer (5) must be transparent or allow light to pass through and preferably protective of layer (4), considering the transparency or thickness of the material of manufacture. Likewise, this second structural layer (5) must be distinct from the sacrificial layer (2) and must be compatible with the method of removing the sacrificial layer (2) for not being affected/damaged. The particular embodiment for fabricating microparticles in which an opaque design layer (4) is used over a transparent structural layer (3) and may be protected by a second transparent structural layer (5) is illustrated in Figure 1B and 1C. In the context of the present invention, "chip" means a microparticle fabricated by microelectronics and MEMS and NEMS techniques. In the context of the present invention, "metadata chip" means a microparticle fabricated by microelectronics and MEMS and NEMS techniques which contain data and metadata information.

In a preferred embodiment, the design layer (4) and/or the structural layer (3) (and/or the structural layer (5), if any) contains or are composed of a magnetic or magnetizable material, to allow the manipulation of the metadata chip (8) through external magnetic fields (e.g. magnet). The bidimensional metadata chips means a 2D matrix code which include data and metadata at micro- or nanoscale allowing large information capacity, error correction to interpret the code correctly even if parts are missing, security properties, format information, encoding modes, encryption, among others. Bidimensional Metadata chips allow static but also dynamic Metadata information to be update at the same code, (i.e. personalization based on user or localization or tracks scans). In the most preferred case, the chip uses the typical codification from QR codes, however the invention is not limited to QR data modules as there are other matrix barcodes containing displayable data and metadata information, Data Matrix code, PDF417, Aztec, which or even a future tailored for a specific purpose designed metadata codifications which can also be fabricated by the same technology. In this context of the present invention, the term "Metadata Suspension" refers to a liquid or semiliquid (the liquid or semiliquid phase) suspension of Metadata suspended metadata chips (8) (the solid phase), e.g. chips, which contain data and metadata information. In the context of the present invention, the transparent and opaque materials are typical materials from microelectronics and MEMS and NEMS field. Preferably, the opaque material is selected from the group consisting of aluminium, polysilicon and amorphous silicon, among others. In a preferred embodiment, the opaque material has magnetic properties for allowing the external movement of the microparticle. Magnetic or magnetizable materials from the microelectronics and MEMS and NEMS field are: Ni, Co, NiCo or the like. Alternatively, the structural materials could provide the magnetic capabilities, in that case a transparent magnetic or magnetizable material should be preferable. In the context of the present invention, microelectronics and MEMS and NEMS techniques means the fabrication processes to manufacture microelectronic chips and miniature devices that integrate mechanical and electrical components at the microscale and that can incorporate components at the nanometer scale. For instance, but not limited to the following cases: lithographic techniques (photolithography, electron beam lithography, nanoimprint lithography,...), deposition techniques (physical vapour deposition, chemical vapour deposition) for depositing layers; growing techniques for growing materials; etching techniques (wet etching, dry etching, deep reactive ion etching,..) for partially or totally removing materials; doping techniques for introducing ions in the layers; micro/nanomachining (bulk micromachining, surface micromachining, focused ion beam micromachining...) for patterning 3D devices; bio-chemical surface modification (wet chemistry, dip-pen lithography, microcontact printing, polymer pen lithography...) for decorating the chip by bio-molecules, nanoparticles... These techniques are not easily accessible, thus the duplication (forgery) or creation of fake barcodes (spoofing) is substantially more complex. In the context of the present invention, "starting" material or substrate means the wafers where the chips are fabricated on its top flat surface (typically, but not limited, a silicon wafer), whilst "sacrificial" layer means a material layer over the starting material that attaches the chip to the substrate during their manufacture, but that, after the chip is obtained it can be sacrificially etched or dissolved to release the chips (8) from the substrate. Also, in the context of the present invention "structural" layer means a layer or layers that define the total dimensions of the chips (8) and mechanically support the data modules (41) made on the design layer (4). The structural layer should be transparent to allow viewing of the data modules (41) and must withstand etching of the sacrificial layer without damage. These layers are also configured to mechanically and chemically protect the design layer (4) from damage during, fabrication, manipulation and use.

In the case of the design layer (4), it means the material that is patterned to define the data modules (41) (this layer must be non-transparent or allow contrast between the structural layer and the design layer, and must withstand etching of the sacrificial layer (2) without damage or, preferably, be protected from etching of the sacrificial layer (2) by a second structural layer on the top). The "array" means that there is an ordered disposition or ordered joint of chips (8) on a substrate, this means: an arrangement of ordered metadata chips (8).

In a particular embodiment, after step f) (see Figs 1A, 1B and 1C), each metadata chip (8) is separated from the substrate, collected and resuspended in a liquid medium, said medium being selected from the group consisting of: aqueous, organic and inorganic non-aqueous, and polar aprotic solvents, ionic liquids and supercritical fluids, among others, and combination thereof; depending on the final application the medium can be an ink, a biochemical medium, or any liquid transfer medium use to transfer the chip to a surface or any other medium. This is a way of individualizing the metadata chips from the array resulting from the claimed method. The metadata chip (8), at the scale of a microparticle, can remain in suspension or be transferred to a surface of a product or to another medium.

If maintained in a suspension (or optionally transferred to another suspension medium), the liquid medium suspending the metadata chips (8) can be preferably selected from the group consisting of: an ink, a biochemical analytic medium and a liquid having glue/adhesive properties. In this last case, the metadata chips (8) can be deposited on a surface (6), and after drying, remaining on said surface or inside a material.

The fabricated metadata chips (8) are made from materials, or combinations of materials, commonly used in the microelectronics and MEMS and NEMS industries. Here, it is combined microchips produced by standard microelectronics technologies, based on photolithography techniques to allow high-dimensional control, with commercial and non-commercial liquids/media to guarantee instrument compatibility, for instance, inks. It has been proved the transfer of chips (8) at the microscale using traditional and economically-viable instruments, including contact techniques such as painting tools (paintbrush) or writing devices (fountain or ballpoint pens), but also by non-contact techniques as an inkjet printer, where the ink droplet containing suspended chips travels from the instrument to the substrate. Universality is also enhanced, by using the transfer to daily printable and writable substrates as paper or textile, which have complex 3D textures at the microscale.

As an additional, advantageous embodiment, at least one surface of the metadata chips (8) can be also biochemically functionalized to add further functionalities, thus having enhanced or tuned optical properties, thus allowing biochemical detection of recognition. For that reason, in a preferred embodiment the method comprises a step of functionalizing the surface of the metadata chips (8) after step f), with at least one molecular component, by means of a crosslinker (71a), e.g. silane, capable of covalent bonding to the surface, thus generating a second reactive site capable of linking one compound together. The functionalizing stage comprises:
- immobilizing a crosslinker (71a), by means of a compound (e.g. silane) having at least one free reactive group to bind the crosslinker (71a) onto the unmodified surface of the metadata chips (8) using any medium that does not affect the metadata chip (8); and
- reacting a second functional group of the crosslinker (71a) to at least one compound.

The first step corresponds to a functionalization phase, either of the upper surface by soft lithography while the metadata chips (8) remain on top of the substrate or starting material (1), or of the whole surfaces (6) of the metadata chip (8) by wet chemistry after having released the chips from the substrate, using a crosslinker (71a). Preferably, the crosslinker (71a) is a silane having at least one free reactive group. The second step corresponds to a phase for grafting any compound selected from molecules, biomolecules, micro/nanoparticles or a combination thereof onto these surfaces of the metadata chips obtained in the previous step. In Figure 8, first compound (71) means the crosslinker (71a) and the grafted material, whilst Figure 9 discloses metadata chips (8) without functionalization phase (Step 1a); and metadata chips (8) with top surface (Step 2a) or the whole surfaces functionalized (Step 3a) embedded in a transparent material for additional chip protection or/and to fix the metadata chips (8) to a surface by glue, resin, varnish...

In case that a response is needed for activating the compound, the modified metadata chips (8) may be configured to produce a signal when exposed to a reactive element, for example changing the colour of the metadata chip (8) for detection (see Figure 10A).

The term 'crosslinker' refers herein to a heterobifunctional molecule with two functional groups:
- a functional group that spontaneously reacts to form covalent bonds with the surface of the chip, and
- a functional group selected from the list consisting of primary or secondary amines, epoxide, thiol, carboxyl, azide, vinyl, isocyanate or methacryloyloxy groups that form a covalent bond with the compound, said compound being selected from the group consisting of: molecules, biomolecules, micro and nanoparticles, microorganisms, cells and biological dispersion units. The term 'molecules' refers to compounds selected from the group consisting of: luminescent, anti-caking, anti-adhesion and cross-linking compounds, which contain one or more chemical endings that allow binding by covalent bonds to the surface of the planar microparticle. Luminescent compounds include fluorescent substances, such as fluorophores derived from the xanthene, cyanine, squaraine, naphthalene, coumarin, oxydiazole, anthracene, pyrene, oxazine, acridine, arylmethine, tetrapyrrole or dipyrromethane families; as well as phosphorescent substances, including zinc sulphide, strontium aluminate and rare earths doped with europium or terbium. Anti-caking compounds improve the surface properties of the metadata chips in suspension, reducing the formation of agglomerates due to their polarity. Anti-sticking compounds prevent physical bonding between the metadata chips (8) in suspension. Examples of these include silicon oxide, calcium silicate, magnesium carbonate, sodium ferrocyanide, potassium ferrocyanide, cellulose and poly(ethylene glycol) (PEG).

The crosslinking compounds generate a molecular network on the surface of the metadata chips (8). This network can contain reactive molecular ends that allow additional compounds to be incorporated into the surface, such as amine-amine, sulphhydryl-carbohydrate, sulphhydryl-sulphhydryl, amine-sulphhydryl and carboxyl-amine crosslinkers. Together, these molecules can give the metadata chip (8) specific chemical properties, such as their use in chemical sensors or actuators. The term 'biomolecules' refers to carbohydrates (such as sugars and starches), proteins, antibodies, enzymes and nucleic acids (DNA and RNA). These biomolecules can be grafted onto a reactive surface by means of a crosslinker. As stated above, the crosslinker (e.g. silane) functional group reacts spontaneously, forming covalent bonds with the surface of the metadata chip, while a second functional group, selected from amino (primary or secondary), epoxide, thiol, carboxyl, azide, vinyl, isocyanate or methacryloyloxy, is capable of establishing covalent bonds with the functional groups present on the biomolecules or their modified versions. In this way, the biomolecules are covalently attached to the first reactive surface of each metadata chip. This grafting process is of great interest in proteomics and genomics assays. The term 'micro/nano particles' refers to metadata chips (8) having a size between 1 nm and 10 µm in size, which have reactive groups on their surface and can be immobilized on the metadata chips by covalent bonds. For example:
- Carbon micro/nanoparticles, such as fullerenes and carbon nanotubes;
- Metal micro/nanoparticles, derived from metal precursors;
- Ceramic micro/nanoparticles, composed of non-metallic solids;
- Polymeric micro/nanoparticle; and
- Semiconductor micro/nanoparticles, such as quantum dots.

Each type of micro/nanoparticle includes a functional group that can be grafted onto a reactive surface via a crosslinker (71a). While the crosslinker (71a) functional group spontaneously reacts to form covalent bonds with the surface (6) of the metadata chips (8), another functional group, selected from primary or secondary amines, epoxide, thiol, carboxyl, azide, vinyl, isocyanate or methacryloyloxy, establishes a covalent bond with the functionalization present on the modified micro/nanoparticle. Micro/nanoparticle grafting onto metadata chips (8) has applications of great interest, such as diagnostic imaging, barcoding, surface reactivity enhancement, catalysis and nucleation site creation. The term 'microorganism' refers herein to bacteria, archaea, fungi, protozoa, algae and viruses existing in their unicellular form or in a colony of cells. Such a microorganism can be grafted onto a reactive surface comprising, by means of the cross-linking agent. While the cross-linker functional group spontaneously reacts to form covalent bonds with the surface of the metadata chip, the functional group selected from the list consisting of primary or secondary amines, epoxide, thiol, carboxyl, azide, vinyl, isocyanate or methacryloyloxy groups forms a covalent bond with the proteins, carbohydrates or other biomolecules present on the outer membrane of the microorganism. In this way, the micro-organisms covalently bind to the first planar reactive surface of each metadata chip. Grafting of microorganisms is of interest in biomedical, health and environmental assays. The term 'cell' or 'cells' refers herein to eukaryotic cells existing in their unicellular form or in a colony of cells. Such a cell or cells can be grafted onto a reactive surface comprising by means of the crosslinking agent. While the functional group spontaneously reacts to form covalent bonds with the surface of the metadata chip, the functional group selected from the list consisting of primary or secondary amines, epoxide, thiol, carboxyl, azide, vinyl, isocyanate and methacryloyloxy groups forms a covalent bond with proteins, carbohydrates or other biomolecules present on the outer membrane of the cell. In this way, the cells covalently bind to the first planar reactive surface of each metadata chip. Cell engraftment is of interest in biomedical, health and pharmaceutical assays. The term 'biological dispersal units' refers herein to pollen and propagules such as seeds and spores. Such dispersed biological units can be grafted onto a reactive surface comprising by means of the crosslinker. While the functional group spontaneously reacts to form covalent bonds with the surface of the metadata chip, the functional group selected from the list consisting of primary or secondary amines, epoxide, thiol, carboxyl, azide, vinyl, isocyanate or methacryloyloxy groups forms a covalent bond with proteins, carbohydrates or other biomolecules present on the outer membrane or capsule of the dispersed biological units. In this way, the biological dispersal units covalently bind on the first flat reactive surface of metadata chip (8). Grafting of these units is of interest in forestry, ecology and environmental testing.

It should be taken into account that, in all these uses it is more difficult to read the code from any direction when placed in non-planar surfaces or suspended in liquid medium; due to their small size it requires a high encoding capacity of data per unit of area; the small printout size of the code requires a precise technology to avoid distortion or loss of the data and bad quality image; problems with the illumination can reduce the contrast which required appropriated materials; due to their small size the matrix codes has to be manipulated or transferred suspended in liquids medium; the small size require of error correction systems. All these problems are solved with the present invention.

The metadata chips (8) can be used to sign documents as well as to identify artwork, or any other (luxury or valuable) item with security ensured because these documents contain metadata chips (8) that:
1. Function as a standalone code;
2. Due to their small size, the position where they are placed serves as additional encoding;
3. The code has metadata;
4. The codes include error correction to circumvent device damage or soiling at the microscale;
5. When the code is read, it directs to a validation page for the signature or object by the owner, responsible party, etc., hidden text and messages, authentication or tracking tokens linked to a location to track where the code has been scanned;
6. Compatible with popular operating systems of personal devices as mobiles, cameras, computers;
7. Structural layers can protect the code from mechanical or chemical damaging during fabrication, manipulation or use.

The metadata chips (8) can be used also for biochemistry and biotechnology.

Performing multiplexed biochemical analyses by suspended arrays (SA) is limited because it is difficult to differentiate subpopulation of metadata chips (8) from one another. Typically, a particle is functionalized with a substance that emits light when it detects another substance. Since there are few fluorophores or light-emitting molecules available as subpopulation attribute, each subpopulation of metadata chips (8) emits light corresponds to a specific colour, but there are only a few colours available. Therefore, simultaneous detections are limited to the number of colours available, likely no more than 4 or 5.

Thanks to the present invention, the information about which molecule is being detected would be encoded within the chip itself, rather than being determined by the colour emitted in a positive detection. This allows for the possibility of having, for instance, 1,000,000 unique chips, each prepared to detect a specific biochemical substance, all emitting the same colour upon detection of their target molecule. This works because the information encoded in the chip that lights up would indicate what was detected. Again, the metadata chip (8) can have relevant additional information and/or redirect to a web page, smartphone app or similar, Figure 10B, since it contains metadata information. In addition, In these applications where metadata 2D matrix codes are in suspension in liquids, Metadata suspension, it required to read the code from any direction, due to their small size it requires a high encoding capacity of data per unit of area, the small printout size of the code requires a precise technology to avoid distortion or loss of the data and bad quality image, problems with the illumination can reduce the contrast which required appropriated materials, and due to their small size the matrix codes has to be manipulated or transfers suspended in liquids medium, and an error correction system is required.

Therefore, chips can be used to biochemical multiplexing because the biochemical assay contain chips that:
1. Function as a standalone code;
2. The code has metadata;
3. The codes include error correction to circumvent device damage or soiling at the microscale;
4. When the code is read, it directs to a validation page for the identification of the positive or negative detection of the analyte, hidden text and messages, tracking tokens be linked to track the assay where the code has been scanned;
5. Compatible with popular operating systems of personal devices as mobiles, cameras, computers...;
6. Structural layers can protect the code from damaging.

A second object of the present invention is a suspension of at least one metadata chip (8) having a nanometric size or a micrometric size and having data modules (41) supporting displayable metadata information, which is obtainable by means of the method defined above, in any alternative or embodiment.

Similarly, a third object of the present invention is a chip (8) having a nanometric size or a micrometric size and data modules supporting displayable metadata information, obtainable by means of the method defined above, in any alternative or embodiment. The chip (8) must be individualized from the array and from the suspension containing the chips (8), thus the method comprises a further step of individualizing the chips (8) from the suspension.

It is also an object of the present invention an article comprising at least one chip (8). Said article can be a solid product or a liquid product. Preferably, the article is selected from the group consisting of:
· products which can embedded chips during fabrication (man-made transparent products as plastics stationery (plastic rulers, pens...), acrylic plexiglass, polycarbonate, cellphone products and other technological devices;
· artistic products which can embedded metadata chips during fabrication (i.e. porcelain, ceramic or glass pieces, clay sculptures among others);
· biological fluids and cells, such as sperm and oocytes; body fluids, animal fluids or plant fluids or waste: blood plasma, lymph, cerebrospinal fluid (CSF), saliva, tears, sweat, urine, gastric juice, bile, pancreatic juice, synovial fluid, pleural fluid, peritoneal fluid, semen, vaginal secretions, breast milk, amniotic fluid, mucus, stool, and excrements;
· liquids and semi-liquids of different nature (pen and fountain pen inks, tattoo inks, creams and other cosmetics and personal care, pharmaceuticals, alcohol brands, detergents and cleaning solutions, glycerin, liquid fuels, insulin, scorpion and snake venom, perfume, edible food, such as juices as Yubari King Melon Juice; radioactive liquids, and saffron oil), for identity, anti-counterfeiting and anti-piracy; and documents, such as banknotes, bills, passports, driver's licenses, agreements and instruments (executed or legal documents), and other official (ID card) documents to prevent fraudulent copies.

Finally, another object of the present invention is the use of a metadata suspension as the one defined above, or a chip (8) as the one defined above for/as. The use can be selected from the group consisting of:
· healthcare - Pharmaceuticals tracking. High security identification with reducing errors, de-anonymization of body fluids, animal fluids or plant fluids or waste (blood plasma, lymph or cerebrospinal fluid (CSF), saliva, tears, sweat, urine, gastric juice, bile, pancreatic juice, synovial fluid, pleural fluid, peritoneal fluid, semen, vaginal secretions, breast milk, amniotic fluid, mucus, stool, excrements. For some applications biocompatibility must be assured;
· high-security identification with reducing errors of personal prostheses;
· high security identification of highly expensive natural or human-made liquids and semi-liquids; and
· manage with eye-invisible metadata codes of ancestors, fossils, bones, objects.

Preferably, the suspension may be used for biochemical multiplexing detection by a subpopulation of metadata chips (8), where the metadata chips of every subpopulation have a unique and representative attribute. Also preferably, in this embodiment the design layer (4) and/or the structural layer (3) (and/or the second structural layer (5)) are made of a magnetic or magnetizable material to allow metadata chip (8) manipulation. One of the most preferred uses is transferring metadata metadata chips (8) to authenticate documents; this way, the metadata particle remains in a signed document and has metadata to protect from copying, identify the signer, redirect to a web...

Below are examples of the implementation of the invention, which define the production process for the metadata chips (8). A description/characterization of the metadata chips (8)manufactured with this method is presented, as well as a description of how a Metadata suspension is prepared with these metadata chips (8) and their deposit over various materials or transfer to a biochemical assay medium. In this example we use the codification systems of QRs for producing the metadata chips (8) examples. Although the thickness and lateral dimensions of the QR chips can include a wide range, two specific examples are shown, for illustrative purpose.

### Example 1. Fabrication of SiO₂ and Aluminum Miniaturized QR Metadata Chips

To produce the metadata chips (8), a 100 mm diameter and 500 µm thick silicon wafer substrate was used.

Step a): A 100 nm layer of aluminium was deposited as a sacrificial layer. Figure 1 (Step a) illustrates the application of the "sacrificial layer" (2) onto the substrate (1).

Step b): On the surface of the sacrificial layer (2), the first structural layer (3) of 200 nm thick silicon dioxide was deposited, as shown in Figure 1, Step b), using the Plasma Enhanced Chemical Vapour Deposition (PECVD) technique.

Step c): On top of the structural layer (3), the "design layer" (4) consisting of 100 nm of aluminium was deposited using the sputtering technique.

Step d): Photolithography was used to define the shape and dimensions of the structures in the design layer (4). A photoresist is spun. The photoresist was exposed to UV light through a custom photomask affixed to an aligner and developed. The exposed aluminium was then etched using chlorine plasma Reactive Ion Etching (RIE), and the photoresist used during photolithography was subsequently removed, as shown in Figure 1, Step d).

Step d'): On the surface of the design layer (4), a second structural layer (5) of 200 nm thick silicon dioxide was deposited using the PECVD technique.

Step e): Photolithography was used again to define the shape and dimensions of the entire device. A photoresist is spun. The photoresist was exposed to UV light through a custom photomask affixed to an aligner and developed. The exposed SiO₂ was then etched using Deep Reactive Ion Etching (DRIE), and the photoresist from the photolithography process was removed, as shown in Figure 1,

Step e). An optical microscopy image of the QR metadata chips on the substrate is shown in Figure 2, before the sacrificial layer (2) was etched/dissolved and the chips (8) were released. Finally, Step f) in Figure 1 represents the removal of the soluble sacrificial layer by dissolving/etching it with a 50% aqueous KOH solution. Etching was carried out until the sacrificial aluminium was completely removed. The resulting metadata chips (8) were then separated from the initial substrate, collected, and re-suspended in water.

Figure 3 shows an optical microscopy image of the QR metadata chips (8) after their release from the sacrificial layer and collecting them in water. The metadata chips (8) in solution, Metadata Suspension, can be deposited over a surface and let dry to fix it over the surface, as shown in Figure 4 through a liquid or semi-liquid medium onto the surface (6).

### Example 2. Identification of Artwork Using Miniaturized QR Metadata Chips (8)

Following the process outlined in Example 1 for obtaining QR metadata chips, the chips were re-suspended in water and deposited onto an oil painting using a paintbrush. Figure 5 shows a microscopy image locating a metadata chip on the canvas of the oil painting.

### Example 3. Identification of Documents Using Miniaturized QR Metadata Chips (8)

Following the process outlined in Example 1 for obtaining QR metadata chips (8), the chips were re-suspended in ballpoint pen ink and deposited onto paper using a ballpoint pen. Figure 6 shows a microscopy image locating a metadata chip (8) on the paper precisely along the pen's stroke.

### Example 4. Authenticating Signatures Using Miniaturized QR Metadata Chips (8)

Following the process outlined in Example 1 for obtaining QR metadata chips (8), the chips were re-suspended in fountain pen ink and deposited onto printer paper using a fountain pen. Figure 7 shows a microscopy image locating a metadata chip (8) on the paper precisely along the fountain pen's stroke.

### Example 5. Functionalization of Miniaturized Metadata Chips (8)

The outer surfaces of the miniaturized metadata chips (8) can be functionalized by two different methods, the upper surface can be functionalized by microcontact printing (Figure 8, Step 1a) and their posterior release (Step 1b) or the release of the metadata chips (8) (Step 2a) and its later functionalization of the chips after release (Step 2b).

### Example 6. Embedding Miniaturized Metadata Chips (8) in Plastics

Following the process outlined in Example 1 for obtaining metadata chips (8), the chips (functionalized or not) can be re-suspended in a melted material (e.g. molten plastic) to embed them in a transparent material after solidification, as represented in Figure 9.

### Example 7. Multiplexed Recognition of Decorated Suspended Metadata Chips (8)

Following the process outlined in Example 1 for obtaining metadata chips (8), the outer surface of the chips was functionalized with specific anchoring decorations. Each decoration is designed to bind selectively to a single recognition element or to detect a (bio)chemical substance or parameter. Multiple batches of metadata chips (8), each bearing a distinct decoration (subpopulation attribute), are suspended together in a single suspension. This suspension is then exposed to a solution containing recognition elements or environmental parameters to detect. As illustrated in Figure 10, only the metadata chips (8) with recognition elements complementary or reactive to the (bio)chemical substance or parameter are read (i.e. by emitting light or similar signal). A successfully signal emission demonstrates selective binding and specificity of the functionalized surfaces.

### Example 8. Fabrication of Magnetizable Miniaturized Metadata Chips (8)

Following the process outlined in step 1 and step 2 from Example 1 for obtaining metadata chips (8), the design layer (4) in step 3 is substituted with a magnetic or magnetizable material, as shown in Figure 1, step 3 (d). The fabrication process proceeds following the next steps in the example 1. These metadata chips (8) can be moved or fixed under an external magnetic field. The outer surface of these chips (8) can be functionalized as shown in Figure 8.

Example 9. Actuation of Magnetizable Functionalized Miniaturized Metadata Chips (8) Following the process outlined in Example 8 for obtaining magnetisable metadata chips (8), chips are fabricated and their outer surface can be functionalized as outlined in Example 7 to obtain metadata chips that can detect (bio)molecules or parameters, or to react to environmental changes. These metadata chips (8) can be moved or fixed in the reaction solution using an external magnetic field to enhance the biochemical reaction. The movement of the metadata chips (8) can also direct them to the position of the recognition elements to detect, as shown in Figure 11. The chips can also be magnetically fixed to change the reaction medium for rinsing or washing purposes.

More particularly, as shown in Figure 1A, the method for producing a metadata chip (8) of data modules (41), comprises the steps of: i) preparing a sacrificial layer (2) on top of a planar substrate of an starting material (1); ii) preparing a first structural layer (3) on top of the sacrificial layer (2), wherein the first structural layer (3) is configured to allows light to pass through, wherein the material of the first structural layer (3) is different from the sacrificial layer (2); iii) preparing a design layer (4) on top of the structural layer, the design layer (4) being capable of including bidimensional metadata information, wherein the material of the design layer (4) is different from the sacrificial layer (2) and the structural layer, said material having a high optical contrast with the first structural layer (3); iv) shaping the design layer (4), using a photolithography technique and a technique selected from engraving or etching, to define shape and dimensions of a data module (41), configured to include bidimensional metadata information; v) shaping the first structural layer (3), using a photolithography technique, to define shape and dimensions of a first cover (31) of the data modules (41); vi) removing the sacrificial layer (2) to obtain the metadata chip (8) of data modules (41). The sacrificial layer (2) having a thickness between 20 nm and 50 µm, and being made of a material selected from the group consisting of: semiconductor material, insulating oxide, insulating nitride, semiconducting oxide, semiconductor nitride, metal, polymer, photoresist, and any combination thereof. The first structural layer (3) having a thickness between 20 nm and 50 µm, being made of a material selected from the group consisting of: semiconductor material, insulating oxide, insulating nitride, semiconducting oxide, semiconducting nitride, metal, polymer, photoresist, and any combination thereof. The design layer (4) having a thickness between 20 nm and 50 µm, being made of a material being selected from the group consisting of: semiconductor material, insulating oxide, insulating nitride, semiconducting oxide, semiconducting nitride, metal, magnetic material, polymer, photoresist, and any combination thereof. The sacrificial layer (2), the first structural layer (3) and the design layer (4) have a thickness between 20 nm a 50 µm.

A specific production process could be. (i) A 100-nm-thick Al sacrificial layer (2) is sputtered onto a Si wafer, followed by deposition of a 200-nm-thick SiO2 structural layer by PECVD to define the chip (8) bottom. A second 100-nm-thick Al layer is then sputtered. (ii) Photolithography and Al dry etching define the data modules (41). (ii) Chips (8) are released by selective etching of the sacrificial layer (2).

Additionally, as shown in Figures 1B and 1C, the method for producing a metadata chip (8) of data modules (41) comprises the step of preparing a second structural layer (5) on top of the design layer (4), wherein the second structural layer (5) is configured to allows light to pass through, wherein the material of the second structural layer (5) is the same from the first structural layer (3). Optionally a second 200-nm-thick SiO2 structural layer is deposited by PECVD.

In a preferred embodiment of the invention, as shown in Figures 1B and 1C, the method for producing a metadata chip (8) of data modules (41) comprises the step of shaping the second structural layer (5), using a photolithography technique, to define shape and dimensions of a second cover (51) of the data modules (41) to obtain the metadata chip (8). The second structural layer (5) having a thickness between 20 nm and 50 µm, being made of a material selected from the group consisting of: semiconductor material, insulating oxide, insulating nitride, semiconducting oxide, semiconducting nitride, metal, polymer, photoresist, and any combination thereof. The overall chip (8) geometry is patterned by a second photolithography and SiO₂ dry etching.

Preferably, as shown in Figures 2 and 3, the data modules (41) are QR data modules (41).

More specifically, as shown in Figures 8 and 9, the method for producing a metadata chip (8) of data modules (41) comprises the step of biochemically functionalizing at least one external surface (6) of the data modules (41), with at least one first compound (71) having at least one free reactive group capable to react with a second compound (72), the first compound (71) being capable of covalent bonding to the at least one external surface (6) of the data modules (41). The data modules (41) being functionalized by at least one compound selected from molecules, biomolecules, nanoparticles, or any combination thereof. The first compound (71) and/or second compound (72) comprises optionally molecular components, microparticles, nanoparticles, microorganisms, cells and/or viruses.

According to a preferred embodiment of the invention, as shown in Figures 8 and 9, the first compound (71) is capable of covalent bonding to the at least one external surface (6) of the data modules (41) by means of an intermediate crosslinker (71a).

Complementarily, as shown in Figure 11, the design layer (4) and/or the first structural layer (3) and/or the second structural layer (5) comprises a magnetic material, being the metadata chip (8) of nanometric size or micrometric size.

The present invention also relates to, as shown in Figures 1c and 2, a metadata chip (8) of data modules (41), wherein the first structural layer (3) and/or the second structural layer (5) are of silicon dioxide.

Advantageously, as shown in Figures 2 and 3, the data modules (41) comprises at least a two dimensional matrix barcode.

Furthermore, as shown in Figures 2 and 3, the data modules (41) comprises redirect links to external sources of information.

Complementarily, as shown in Figures 2 and 3, the data modules (41) comprises error checking and/or correction data.

More specifically, as shown in Figures 2 and 3, the data modules (41) comprises encryption and cipher data.

In more detail, as shown in Figures 2 and 3, the data modules (41) comprises contact data, as phone numbers, email addresses, and addresses, specially for QR-coded and vCards as social media data.

Complementarily, as shown in Figures 2 and 3, the data modules (41) comprises chip (8) identification data, such as chip (8) ID, manufacturing date and calibration parameters.

Furthermore, as shown in Figures 2 and 3, the data modules (41) comprises semantic and/or technical context data, with content type of text, image, audio type, etc, and file format of PDF, CSV, JSON, etc.

The details, shapes, dimensions and other accessory elements, as well as the components used in the implementation of the method for producing a metadata chip (8) of data modules (41), may be conveniently replaced by others that are technically equivalent, and do not depart from the essence of the invention or the scope defined by the claims included after the following list.

### List of numerical references:

- 1: starting material
- 2: sacrificial layer
- 3: first structural layer
- 31: first cover
- 4: design layer
- 41: data module
- 5: second structural layer
- 51: second cover
- 6: surface
- 71: first compound
- 71a: crosslinker
- 72: second compound
- 8: chip

## Claims

1. Method for producing a metadata chip (8) of data modules (41), **characterized in that** it comprises the steps of:
i) preparing a sacrificial layer (2) on top of a planar substrate of an starting material (1);
ii) preparing a first structural layer (3) on top of the sacrificial layer (2), wherein the first structural layer (3) is configured to allows light to pass through, wherein the material of the first structural layer (3) is different from the sacrificial layer (2);
iii) preparing a design layer (4) on top of the structural layer, the design layer (4) being capable of including bidimensional metadata information, wherein the material of the design layer (4) is different from the sacrificial layer (2) and the structural layer, said material having a high optical contrast with the first structural layer (3);
iv) shaping the design layer (4), using a photolithography technique and a technique selected from engraving or etching, to define shape and dimensions of a data module (41), configured to include bidimensional metadata information;
v) shaping the first structural layer (3), using a photolithography technique, to define shape and dimensions of a first cover (31) of the data modules (41);
vi) removing the sacrificial layer (2) to obtain the metadata chip (8) of data modules (41).

2. Method for producing a metadata chip (8) of data modules (41), according to claim 1, **characterized in that** it comprises the step of preparing a second structural layer (5) on top of the design layer (4), wherein the second structural layer (5) is configured to allows light to pass through, wherein the material of the second structural layer (5) is the same from the first structural layer (3).

3. Method for producing a metadata chip (8) of data modules (41), according to claim 1, **characterized in that** it comprises the step of shaping the second structural layer (5), using a photolithography technique, to define shape and dimensions of a second cover (51) of the data modules (41) to obtain the metadata chip (8).

4. Method for producing a metadata chip (8) of data modules (41), according to any of the claims 1 to 3, **characterized in that** the data modules (41) are QR data modules (41).

5. Method for producing a metadata chip (8) of data modules (41), according to any of the claims 1 to 4, **characterized in that** it comprises the step of biochemically functionalizing at least one external surface (6) of the data modules (41), with at least one first compound (71) having at least one free reactive group capable to react with a second compound (72), the first compound (71) being capable of covalent bonding to the at least one external surface (6) of the data modules (41).

6. Method for producing a metadata chip (8) of data modules (41), according to claim 5, **characterized in that** the first compound (71) is capable of covalent bonding to the at least one external surface (6) of the data modules (41) by means of an intermediate crosslinker (71a).

7. A metadata chip (8) of data modules (41), produced with a method according to any of the claims 1 to 4, **characterized in that** the design layer (4) and/or the first structural layer (3) and/or the second structural layer (5) comprises a magnetic material.

8. A metadata chip (8) of data modules (41), produced with a method according to any of the claims 2 to 3, **characterized in that** the first structural layer (3) and/or the second structural layer (5) are of silicon dioxide.

9. A metadata chip (8) of data modules (41), produced with a method according to any of the claims 1 to 6, **characterized in that** the data modules (41) comprises at least a two dimensional matrix barcode.

10. A metadata chip (8) of data modules (41), produced with a method according to any of the claims 1 to 6, **characterized in that** the data modules (41) comprises redirect links to external sources of information.

11. A metadata chip (8) of data modules (41), produced with a method according to any of the claims 1 to 6, **characterized in that** the data modules (41) comprises error checking and/or correction data.

12. A metadata chip (8) of data modules (41), produced with a method according to any of the claims 1 to 6, **characterized in that** the data modules (41) comprises encryption and cipher data.

13. A metadata chip (8) of data modules (41), produced with a method according to any of the claims 1 to 6, **characterized in that** the data modules (41) comprises contact data.

14. A metadata chip (8) of data modules (41), produced with a method according to any of the claims 1 to 6, **characterized in that** the data modules (41) comprises chip (8) identification data.

15. A metadata chip (8) of data modules (41), produced with a method according to any of the claims 1 to 6, **characterized in that** the data modules (41) comprises semantic and/or technical context data.
